# EUROPÄISCHE PATENTSCHRIFT

(11) **EP 3 194 106 B1**
(45) Veröffentlichungstag und Bekanntmachung des Hinweises auf die Patenterteilung: **04.12.2019**
(21) Anmeldenummer: 15774518.3
(22) Anmeldetag: 09.09.2015
(51) Int. Cl.: B23K 20/10, B23K 20/26, H01R 43/02, B23K 28/02, B23K 101/38

(54) **VORRICHTUNG ZUM VERSCHWEISSEN VON STABFOERMIGEN LEITERN**
APPARATUS FOR WELDING TOGETHER BAR-SHAPED CONDUCTORS
DISPOSITIF POUR SOUDER DES CONDUCTEURS EN FORME DE BARRES

(30) Priorität: 17.09.2014 DE 102014013452
(43) Veröffentlichungstag der Anmeldung: 26.07.2017
(73) Patentinhaber: Schunk Sonosystems GmbH, 35435 Wettenberg (DE)
(72) Erfinder: WAGNER, Peter, 35435 Wettenberg (DE); STROH, Dieter, 35435 Wettenberg (DE); WAGENBACH, Rainer, 35799 Merenberg (DE)
(74) Vertreter: advotec.
(86) Internationale Anmeldenummer: PCT/EP2015/070572
(87) Internationale Veröffentlichungsnummer: WO 2016/041825

(56) Entgegenhaltungen:
- EP-A2- 0 286 975
- WO-A1-2011/076515
- DE-A1- 4 406 337
- DE-C1- 3 719 083

## Beschreibung

Die vorliegende Erfindung betrifft eine Vorrichtung zum Verschweißen von stabförmigen Leitern, umfassend einen Verdichtungsraum zur Aufnahme von miteinander zu verbindenden Verbindungsbereichen der Leiter, wobei der Verdichtungsraum in Richtung einer z-Achse an zwei einander gegenüberliegenden Seiten durch eine Arbeitsfläche einer in Richtung einer x-Achse Ultraschallschwingungen übertragenden Sonotrode und eine Gegenfläche einer Gegenelektrode sowie in Richtung einer y-Achse an zwei einander gegenüberliegenden Seiten durch eine Begrenzungsfläche eines in Richtung der y-Achse verfahrbaren Schieberelements und eine Begrenzungsfläche eines Begrenzungselements begrenzt ist, wobei die Vorrichtung eine mit einer Antriebseinrichtung versehene Messereinrichtung mit einem in Richtung der z-Achse verfahrbaren Messer aufweist, das eine am Verdichtungsraum vorbei bewegbare Schneidkante aufweist, welche mit einer den Verdichtungsraum begrenzenden oder benachbart zum Verdichtungsraum angeordneten Gegenschneidkante derart zusammenwirkt, dass im Verdichtungsraum angeordnete Verbindungsbereiche bei Aktivierung der Messereinrichtung von den Leitern abgetrennt werden.

Bei einer bekannten Vorrichtung der eingangs genannten Art ist zum Antrieb der Messereinrichtung ein Antriebsmotor vorgesehen, der in einem an den Verdichtungsraum in Richtung einer x-Achse anschließend ausgebildeten Installationsraum angeordnet ist. Der Antriebsmotor ist als pneumatischer Zylinder ausgebildet und bewirkt eine Schneidbewegung des Messers mit seiner sich in Richtung der z-Achse erstreckenden, mit dem Messerhalter verbundenen Kolbenstange.

Die an der bekannten Vorrichtung ausgebildete Messereinrichtung wird häufig auch als sogenannter Schlechtteilschneider bezeichnet, welcher verhindern soll, dass mit der Vorrichtung hergestellte fehlerhafte Schweißknotenverbindungen weiterverarbeitet werden. Hierzu ist die Vorrichtung so ausgebildet, dass während der Herstellung der Schweißknotenverbindung im Verdichtungsraum die Prozessparameter oder auch die Geometrie des im Verdichtungsraum hergestellten Schweißknotens in-situ überprüft wird und bei Detektierung von Fehlern, also beispielsweise bei Überschreitung definierter Grenzwerte, automatisch die Messereinrichtung aktiviert wird, um durch Abtrennen der fehlerhaft miteinander verschweißten Verbindungsbereiche eine nachfolgende Verwendung der Leiter unmöglich zu machen.

Die bekannte, mit einer Messereinrichtung versehene Vorrichtung weist gegenüber einer Vorrichtung, die keine Messereinrichtung aufweist, eine größere Abmessung in Richtung der x-Achse auf, da die Messereinrichtung einschließlich der Antriebseinrichtung benachbart dem Verdichtungsraum angeordnet ist und somit die Dimension in Richtung der x-Achse um den Installationsraum vergrößert ist. Darüber hinaus schränkt die in Richtung der x-Achse benachbart zum Verdichtungsraum gewählte Anordnung des Installationsraums die Zugänglichkeit des Verdichtungsraums ein. Insbesondere ist bei einer manuellen Einführung der Verbindungsbereiche der Leiter in den Verdichtungsraum der Handhabungsabstand zwischen einer Außenkontur der Vorrichtung und dem Verdichtungsraum um den Installationsraum vergrößert, so dass hierdurch die Handhabung der Leiter für eine exakte Positionierung im Verdichtungsraum erschwert werden kann.

Der vorliegenden Erfindung liegt daher die Aufgabe zugrunde, eine Vorrichtung der eingangs genannten Art vorzuschlagen, die trotz der Ausbildung einer Messereinrichtung keine Vergrößerung der für den praktischen Einsatz der Vorrichtung relevanten Außenabmessungen bedingt. Darüber hinaus liegt der Erfindung die Aufgabe zugrunde, eine Vorrichtung der eingangs genannten Art mit Messereinrichtung vorzuschlagen, bei der durch die Messereinrichtung keine Einschränkung in der Handhabung der mit der Vorrichtung zu verbindenden Leiter bedingt sind.

Zur Lösung dieser Aufgabe weist die erfindungsgemäße Vorrichtung die Merkmale des Anspruchs 1 auf.

Bei der erfindungsgemäßen Vorrichtung ist ein Antriebsmotor der Antriebseinrichtung in einem unterhalb der Sonotrode in Richtung der z-Achse angeordneten Installationsraum angeordnet, wobei der Antriebsmotor zur Ausführung einer Schneidbewegung des Messers über ein Umlenkgetriebe mit einem in Richtung der z-Achse verfahrbaren Messerhalter verbunden ist.

Die erfindungsgemäße Ausgestaltung der Vorrichtung ermöglicht es somit, den Antriebsmotor in einem Installationsraum anzuordnen, der nicht zu einer Vergrößerung der Dimension der Vorrichtung in Richtung der x-Achse beiträgt, wobei lediglich die für den eigentlichen Schneidvorgang benötigten Funktionsteile der Messereinrichtung, nämlich das Messer und der Messerhalter, zur Ausführung der Schneidbewegung in Richtung der x-Achse dem Verdichtungsraum vorgelagert angeordnet werden müssen, ohne dass diese über die Außenkontur der Vorrichtung hinausragten. Die Anordnung des Antriebsmotors in dem unterhalb der Sonotrode angeordneten Installationsraum ist ohne Auswirkung auf die Abmessung der Vorrichtung in Richtung der x-Achse.

Besonders vorteilhaft ist es, wenn der Messerhalter mit einer Führungseinrichtung zur translatorischen Führung des Messerhalters in Richtung der z-Achse versehen ist, wobei die Führungseinrichtung in einer Installationsebene angeordnet ist, die in einer Außenkontur der Vorrichtung oder angrenzend an die Außenkontur ausgebildet ist, so dass auch die Installation des Messerhalters in einer sich in Richtung der z-Achse erstreckenden Ebene ohne wesentliche Auswirkung auf die Abmessung der Vorrichtung in Richtung der x-Achse bleibt.

Bei einer Ausgestaltung der Führungseinrichtung als ein Führungseinsatz, der in eine Ausnehmung eines Vorrichtungsgehäuses eingesetzt ist, kann die Installation der Führungseinrichtung sogar ohne jeden zusätzlichen Installationsraum erfolgen, da in diesem Fall der ohnehin für das Gehäuse benötigte Bauraum mitgenutzt wird.

Vorzugsweise ist das Umlenkgetriebe der Antriebseinrichtung als Zugmittelgetriebe ausgebildet, so dass im Wesentlichen beliebige Relativanordnungen zwischen dem Antriebsmotor und dem Messerhalter möglich sind.

Bei einer besonders bevorzugten Ausführungsform weist das Umlenkgetriebe einen Zugmittelstrang auf, dessen Antriebsende mit einer Kolbenstange eines Kraftzylinders verbunden ist und dessen Abtriebsende mit dem Messerhalter verbunden ist, wobei eine Umlenkung des Zugmittelstrangs über ein Umlenkrad erfolgt, derart, dass das Antriebsende in Richtung der Kolbenstange des Kraftzylinders und ein Abtriebsende in Richtung der z-Achse verläuft, so dass ein vorteilhafter Kraftfluss ermöglicht wird.

Vorzugsweise ist der Kraftzylinder aus mehreren in Richtung der Kolbenstange in Reihe angeordneten Zylindermodulen zusammengesetzt, so dass eine hohe Zylinderkraft bei möglichst schlanker Bauweise des Kraftzylinders erreicht wird, die einen platzsparenden Einbau des Kraftzylinders mit geringer Einbauhöhe ermöglicht.

Wenn der Zugmittelstrang als Kette ausgebildet ist, die zur Ausbildung des Umlenkgetriebes über ein Zahnrad umgelenkt wird, können besonders hohe Beschleunigungen der Bewegung des Messerhalters erfolgen, ohne dass die Gefahr eines Schlupfs zwischen dem Umlenkrad und dem Zugmittelstrang besteht.

Wenn zur Ausführung einer Rückstellbewegung des Messers nach Ausführung einer Schneidbewegung eine Federeinrichtung vorgesehen ist, wird nicht nur eine besonders schnelle Rückstellbewegung möglich, sondern darüber hinaus wird auch ein spielfreier Betrieb des Zugmittelgetriebes gewährleistet.

Besonders vorteilhaft ist es, wenn die Federeinrichtung zwischen dem Messerhalter und der Führungseinrichtung des Messerhalters angeordnet ist, da somit sichergestellt ist, dass die Federbewegung rein translatorisch in Richtung der z-Achse erfolgt.

Wenn Sensoren vorgesehen werden, die in Endpunkten der von dem Messer ausgeführten Schneidbewegung angeordnet sind, lässt sich die korrekte Ausführung des Schneidvorgangs überwachen.

Wenn die Sensoren darüber hinaus zur Aufzeichnung von Ausgangsignalen der Sensoren an eine Rekordereinrichtung angeschlossen sind, lässt sich die korrekte Ausführung des Schneidvorgangs dokumentieren.

Nachfolgend wird eine bevorzugte Ausführungsform der Erfindung anhand der Zeichnung näher erläutert.

Es zeigen:
- **Fig. 1**: eine isometrische Darstellung der Vorrichtung;
- **Fig. 2**: eine Längsschnittdarstellung der in **Fig. 1** dargestellten Vorrichtung;
- **Fig. 3**: eine Teildarstellung der in **Fig. 1** dargestellten Vorrichtung mit isometrischer Darstellung des Verdichtungsraums;
- **Fig. 4**: eine schematische Darstellung der Vorrichtung;
- **Fig. 5**: die Messereinrichtung unmittelbar vor Durchführung eines Schneidvorgangs;
- **Fig. 6**: die Messereinrichtung unmittelbar nach Durchführung eines Schneidvorgangs.

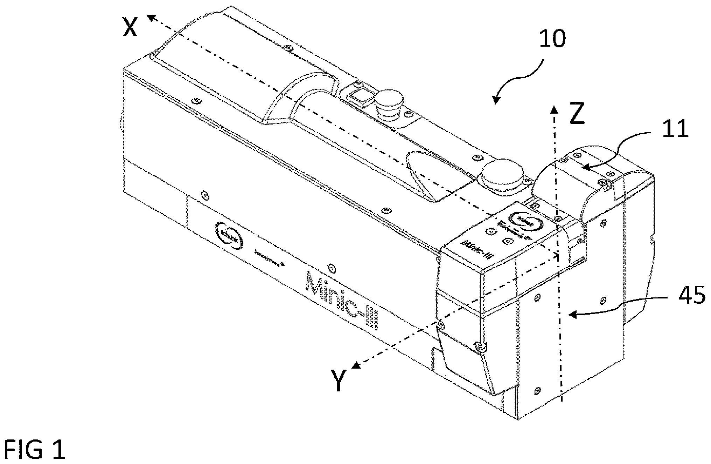

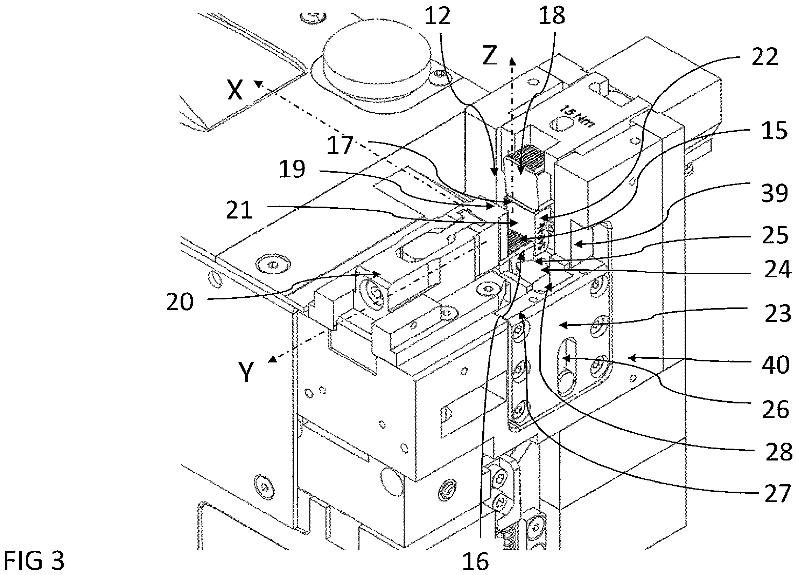

**Fig. 1** zeigt in einer isometrischen Darstellung eine Vorrichtung 10, die unter einer Abdeckung 11 einen insbesondere in **Fig. 3** dargestellten Verdichtungsraum 12 aufweist.

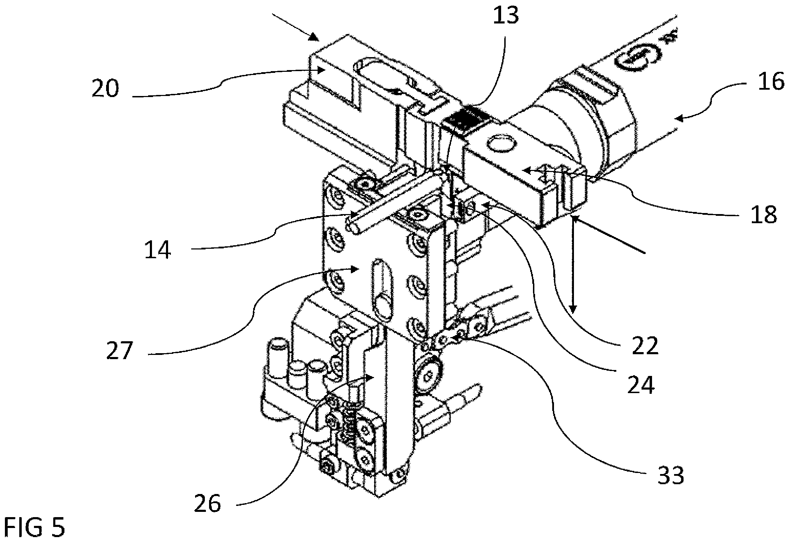

Der Verdichtungsraum 12 dient zur Aufnahme von beispielsweise in **Fig. 5** dargestellten Verbindungsbereichen 13 von elektrischen Leitern 14, wobei, wie insbesondere in **Fig. 3** dargestellt, der Verdichtungsraum 12 in Richtung einer z-Achse an zwei einander gegenüberliegenden Seiten durch eine Arbeitsfläche 15 einer in die Richtung der x-Achse Ultraschallschwingungen übertragenden Sonotrode 16 und eine Gegenfläche 17 einer häufig auch als Amboss bezeichneten, in Richtung einer y-Achse verfahrbaren Gegenelektrode 18 sowie in Richtung der y-Achse an zwei einander gegenüberliegenden Seiten durch eine Begrenzungsfläche 19 eines in Richtung der y-Achse verfahrbaren Schieberelements 20 und eine Begrenzungsfläche 21 eines häufig auch als Touchierelement bezeichneten Begrenzungselements 22 begrenzt ist.

In Richtung einer x-Achse, die im vorliegenden Fall mit der Längsachse der Sonotrode 16 übereinstimmt, ist an den Verdichtungsraum 12 angrenzend eine Messereinrichtung 23 vorgesehen mit einem in Richtung der z-Achse verfahrbaren Messer 24, das im Fall des vorliegenden Ausführungsbeispieles über eine Schraubverbindung mit einem Messerhalter 26 verbunden ist. **Fig. 3** zeigt das Messer 24 in der unteren Messerposition, in der sich eine Schneidkante 25 des Messers 24 unmittelbar unterhalb der Arbeitsfläche 15 der Sonotrode 16 befindet.

Wie insbesondere der **Fig. 3** entnommen werden kann, wird der Messerhalter 26 in einer Führungseinrichtung 27 geführt, die hierzu eine sich in Richtung der z-Achse erstreckende Führungsnut 28 aufweist.

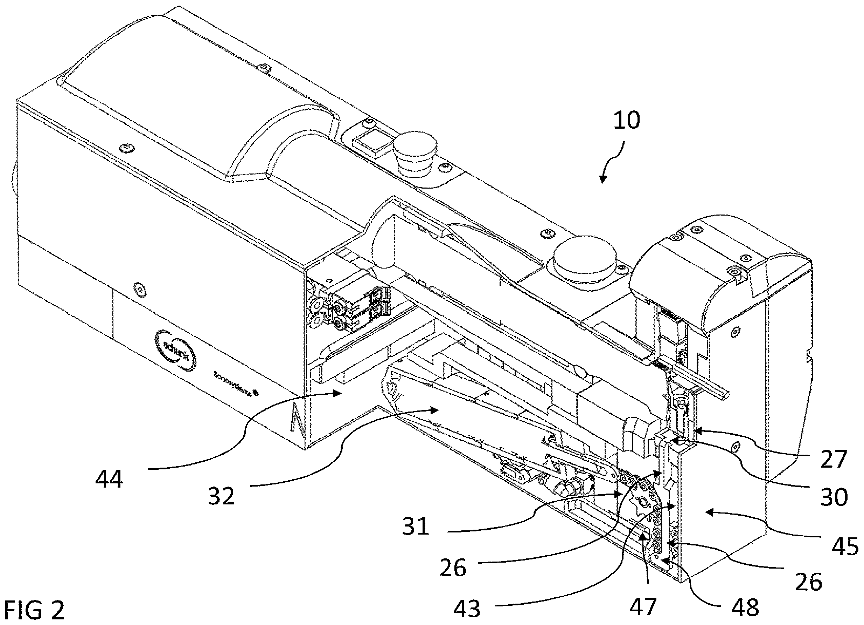

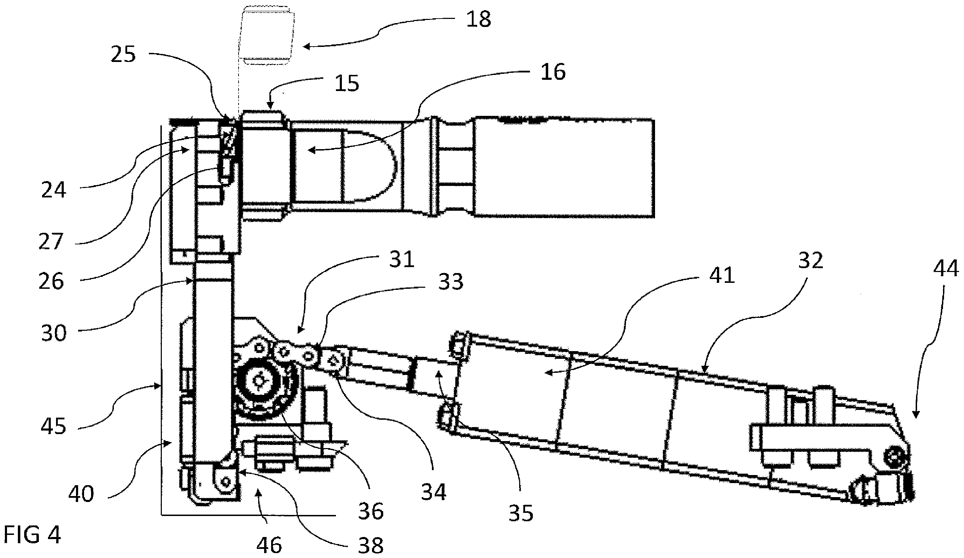

Wie die **Fig. 2** und **4** zeigen, ist der im Falle des vorliegenden Ausführungsbeispiels mit einer Kröpfung 30 versehene Messerhalter 26 über ein Umlenkgetriebe 31 mit einen im Falle des vorliegenden Ausführungsbeispiels als pneumatischer Kraftzylinder 32 ausgebildeten Antriebsmotor verbunden.

Wie insbesondere der schematischen Darstellung in **Fig. 4** zu entnehmen ist, weist das Umlenkgetriebe 31 einen als Kette 33 ausgebildeten Zugmittelstrang auf, dessen Antriebsende 34 mit einer Kolbenstange 35 des Kraftzylinders 32 verbunden ist. Über ein hier als Zahnrad 36 ausgebildetes Umlenkrad erfolgt eine Umlenkung der Kette 33, so dass das Antriebsende 34 der Kette 33 in Richtung der Kolbenstange 35 verläuft und ein Abtriebsende 38, das mit dem Messerhalter 26 verbunden ist, in Richtung der z-Achse verläuft.

Wie insbesondere der **Fig. 3** zu entnehmen ist, ist die Führungseinrichtung 27 als Einsatz ausgebildet, der in eine entsprechende Ausnehmung 39 eines Gehäuseteils 40 der Vorrichtung 10 eingesetzt ist.

Im Betrieb der Vorrichtung erfolgt nach einem Einlegen der Verbindungsbereiche 13 der miteinander zu verbindenden Leiter 14 in den Verdichtungsraum 12 ein Schließen des Verdichtungsraums 12, wobei die Gegenelektrode 18 in Richtung der y-Achse und das Schieberelement 20 in entgegengesetzter Richtung der y-Achse verfahren wird, so dass, wie in **Fig. 5** dargestellt, der Verdichtungsraum 12 geschlossen ist und die Verbindungsbereiche 13 der Leiter 14 definiert aneinander anliegen. Anschließend erfolgt eine Beaufschlagung der Verbindungsbereiche 13 der Leiter 14 mit mechanischen Schwingungen der Sonotrode 16, derart, dass in einem Reibschweißvorgang eine Komprimierung und Verbindung der Verbindungsbereiche 13 miteinander zur Ausbildung eines Schweißknotens erfolgt.

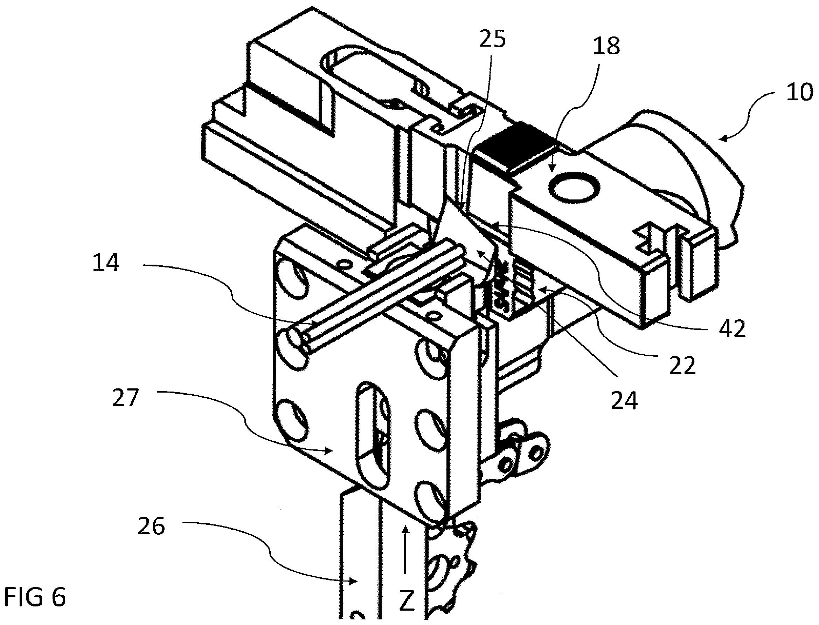

Im Falle der Detektierung eines fehlerhaften Schweißparameters oder einer fehlerhaften Geometrie des hergestellten Schweißknotens wird bei noch geschlossenem Verdichtungsraum die Messereinrichtung 23 aktiviert, derart, dass der Kraftzylinder 32, der im Falle des vorliegenden Ausführungsbeispiels, wie in **Fig. 4** dargestellt, aus vier in Reihe angeordneten Kraftzylinderelmenten 41 zusammengesetzt ist, mit Druckluft beaufschlagt, so dass über das Umlenkgetriebe 31 das Messer 24 in Richtung der z-Achse nach oben bewegt wird und, wie in **Fig. 6** dargestellt, im Zusammenwirken mit einer an der Gegenelektrode 18 ausgebildeten Gegenschneidkante 42 die Verbindungsbereiche 13 von den Leitern 14 abgetrennt werden.

Wie insbesondere aus der **Fig. 2** ersichtlich, ist zur Ausführung einer Rückstellbewegung des Messers 24 nach Ausführung der Schneidbewegung eine Federeinrichtung 43 vorgesehen, die zwischen dem Messerhalter 26 und der Führungseinrichtung 27 angeordnet ist und im Falle des vorliegenden Ausführungsbeispiels als Druckfeder ausgeführt ist. Zur Detektierung eines oberen und eines unteren Endpunkts der Schneidbewegung des Messers 24 sind Sensoren 47 vorgesehen, wobei in **Fig. 2** lediglich der unter Sensor 47 dargestellt ist, der im vorliegenden Fall als induktiver Sensor ausgeführt ist und mit einem Nocken 48 des Messerhalters 26 zusammenwirkt.

Wie insbesondere den **Fig. 2** und **4** zu entnehmen ist, befindet sich der Kraftzylinder 32 in einem unterhalb der Sonotrode 16 angeordneten Installationsraum 44, sodass lediglich die für die Ausführung der Schneidbewegung benötigten Komponenten der Messereinrichtung 23 in Richtung der x-Achse dem Verdichtungsraum 12 vorgelagert sind und insbesondere die Führungseinrichtung 27 in einer sich in Richtung der z-Achse erstreckenden Installationsebene 46 angeordnet ist, die, wie insbesondere aus einer Zusammenschau der **Fig. 2** und **4** deutlich wird, in einer durch das Gehäuseteil 40 definierten Außenkontur 45 der Vorrichtung 10 ausgebildet ist. Eine Verlängerung der Vorrichtung 10 in x-Achsen-Richtung aufgrund der Anordnung der Messereinrichtung 23 an der Vorrichtung 10 findet somit im Wesentlichen nicht statt.

## Patentansprüche

1. Vorrichtung (10) zum Verschweißen von stabförmigen Leitern (14), umfassend einen Verdichtungsraum (12) zur Aufnahme von miteinander zu verbindenden Verbindungsbereichen (13) der Leiter, wobei der Verdichtungsraum in Richtung einer z-Achse an zwei einander gegenüberliegenden Seiten durch eine Arbeitsfläche (15) einer in Richtung einer x-Achse Ultraschallschwingungen übertragenen Sonotrode (16) und eine Gegenfläche (17) einer Gegenelektrode (18) sowie in Richtung einer y-Achse an zwei einander gegenüberliegenden Seiten durch eine Begrenzungsfläche (19) eines in die Richtung der y-Achse verfahrbaren Schieberelements (20) und eine Begrenzungsfläche (21) eines Begrenzungselements (22) begrenzt ist, wobei die Vorrichtung eine mit einer Antriebseinrichtung versehene Messereinrichtung (23) mit einem in Richtung der z-Achse verfahrbaren Messer (24) aufweist, das eine am Verdichtungsraum vorbei bewegbare Schneidkante (25) aufweist, welche mit einer den Verdichtungsraum begrenzenden oder benachbart zum Verdichtungsraum angeordneten Gegenschneidkante (42) derart zusammenwirkt, dass im Verdichtungsraum angeordnete Verbindungsbereiche bei Aktivierung der Messereinrichtung von den Leitern abgetrennt werden,
**dadurch gekennzeichnet,**
**dass** ein Antriebsmotor der Antriebseinrichtung in einem unterhalb der Sonotrode in Richtung der z-Achse angeordneten Installationsraum (44) angeordnet ist, wobei der Antriebsmotor zur Ausführung einer Schneidbewegung des Messers über ein Umlenkgetriebe (31) mit einem in Richtung der z-Achse verfahrbaren Messerhalter (26) verbunden ist.

2. Vorrichtung nach Anspruch 1,
**dadurch gekennzeichnet,**
**dass** der Messerhalter (26) mit einer Führungseinrichtung (27) zur translatorischen Führung des Messerhalters in Richtung der z-Achse versehen ist, wobei die Führungseinrichtung in einer Installationsebene (46) angeordnet ist, die in einer Außenkontur (45) der Vorrichtung oder angrenzend an die Außenkontur ausgebildet ist.

3. Vorrichtung nach Anspruch 2,
**dadurch gekennzeichnet,**
**dass** die Führungseinrichtung (27) als ein Führungseinsatz ausgebildet ist, der in eine Ausnehmung (39) eines Vorrichtungsgehäuses eingesetzt ist.

4. Vorrichtung nach Anspruch 2 oder 3,
**dadurch gekennzeichnet,**
**dass** das Umlenkgetriebe (31) als Zugmittelgetriebe ausgebildet ist.

5. Vorrichtung nach Anspruch 4,
**dadurch gekennzeichnet,**
**dass** das Umlenkgetriebe (31) einen Zugmittelstrang aufweist, dessen Antriebsende (34) mit einer Kolbenstange (35) eines Kraftzylinders (32) verbunden ist und dessen Abtriebsende (38) mit dem Messerhalter (26) verbunden ist, wobei eine Umlenkung des Zugmittelstrangs über ein Umlenkrad erfolgt, derart, dass das Antriebsende in Richtung der Kolbenstange des Kraftzylinders und das Abtriebsende in Richtung der z-Achse verläuft.

6. Vorrichtung nach Anspruch 5,
**dadurch gekennzeichnet,**
**dass** der Kraftzylinder (32) aus mehreren in Richtung der Kolbenstange (35) in Reihe angeordneten Kraftzylinderelementen (41) modular zusammengesetzt ist.

7. Vorrichtung nach Anspruch 5 oder 6
**dadurch gekennzeichnet,**
**dass** der Zugmittelstrang als Kette (33) ausgebildet ist, die zur Ausbildung des Umlenkgetriebes (31) über ein Zahnrad (36) umgelenkt wird.

8. Vorrichtung nach einem der Ansprüche 5 oder 7,
**dadurch gekennzeichnet,**
**dass** zur Ausführung einer Rückstellbewegung des Messers (24) nach Ausführung einer Schneidbewegung eine Federeinrichtung (43) vorgesehen ist, die eine Rückstellbewegung des Messerhalters (26) bewirkt.

9. Vorrichtung nach Anspruch 8,
**dadurch gekennzeichnet,**
**dass** die Federeinrichtung (43) zwischen dem Messerhalter (26) und der Führungseinrichtung (27) des Messerhalters angeordnet ist.

10. Vorrichtung nach einem der vorangehenden Ansprüche,
**gekennzeichnet durch**
Sensoren (47), die in Endpunkten der von dem Messer (24) ausgeführten Schneidbewegung angeordnet sind.

11. Vorrichtung nach Anspruch 10,
**dadurch gekennzeichnet,**
**dass** die Sensoren (47) zur Aufzeichnung von Ausgangsignalen der Sensoren an eine Rekordereinrichtung angeschlossen sind.

## Claims

1. A device (10) for welding rod-shaped conductors (14), comprising a compression chamber (12) for receiving joining sections (13) of the conductors to be joined together, the compression chamber being limited in the direction of a z-axis on two opposite sides by an active surface (15) of a sonotrode (16) transmitting ultrasonic vibrations in the direction of an x-axis and by a counter surface (17) of a counter electrode (18) and in the direction of a y-axis on two opposite sides by a limiting surface (19) of a slider element (20) which can be moved in the direction of the y-axis and by a limiting surface (21) of a limiting element (22), the device having a knife device (23) which is provided with a drive device and comprises a knife (24) movable in the direction of the z-axis, said knife having a cutting edge (25) which can be moved past the compression chamber and cooperates with a counter cutting edge (42) which limits the compression chamber or is arranged adjacent to the compression chamber, the cooperation being such that joining sections arranged within the compression chamber are severed from the conductors when the knife device is activated,
**characterized in that**
a drive motor of the drive device is arranged in an installation space (44) arranged below the sonotrode in the direction of the z-axis, the drive motor being connected to a knife holder (26) via a deflection gear (31) in order for the knife to be able to perform a cutting motion, the knife holder being movable in the direction of the z-axis.

2. The device according to claim 1,
**characterized in that**
the knife holder (26) is provided with a guiding device (27) for guiding the knife holder in a translatory manner in the direction of the z-axis, the guiding device being arranged in an installation plane (46) formed in an outer contour (45) of the device or adjacent to the outer contour.

3. The device according to claim 2,
**characterized in that**
the guiding device (27) is realized as a guiding insert inserted into a recess (39) of a device housing.

4. The device according to claim 2 or 3,
**characterized in that**
the deflection gear (31) is realized as a traction-means drive.

5. The device according to claim 4,
**characterized in that**
the deflection gear (31) has a traction-means train whose drive end (34) is connected to a piston rod (35) of a power cylinder (32) and whose output end (38) is connected to the knife holder (26), the traction-means train being deflected via a deflection wheel in such a manner that the drive end extends in the direction of the piston rod of the power cylinder and the output end extends in the direction of the z-axis.

6. The device according to claim 5,
**characterized in that**
the power cylinder (32) is modularly composed of multiple power cylinder elements (41) arranged in series in the direction of the piston rod (35).

7. The device according to claim 5 or 6,
**characterized in that**
the traction-means train is realized as a chain (33) which is deflected via a gear wheel (36) so as to form the deflection gear (31).

8. The device according to any one of claims 5 or 7,
**characterized in that**
a spring device (43) is provided which causes a resetting motion of the knife holder (26) so as to perform a resetting motion of the knife (24) after performing a cutting motion.

9. The device according to claim 8,
**characterized in that**
the spring device (43) is arranged between the knife holder (26) and the guiding device (27) of the knife holder.

10. The device according to any one of the preceding claims,
**characterized by**
sensors (47) arranged at end points of the cutting motion performed by the knife (24).

11. The device according to claim 10,
**characterized in that**
the sensors (47) are connected to a recording device to record output signals of the sensors.

## Revendications

1. Dispositif (10) pour la soudage de conducteurs (14) en forme de baguette, le dispositif comprenant une chambre de compression (12) destinée à recevoir des parties de liaison (13) des conducteurs à relier, la chambre de compression étant délimitée dans la direction d'un axe Z de deux côtés opposés par une surface active (15) d'une sonotrode (16) transmettant des vibrations ultrasoniques dans la direction d'un axe X et par une contre-surface (17) d'une contre-électrode (18) et dans la direction d'un axe Y de deux côtés opposés par une surface de délimitation (19) d'un élément coulissant (20) qui est déplaçable dans la direction de l'axe Y et par une surface de délimitation (21) d'un élément de délimitation (22), le dispositif ayant un dispositif de couteau (23) qui est muni d'un dispositif d'entraînement et qui comprend un couteau (24) déplaçable dans la direction de l'axe Z, ledit couteau ayant une arête de coupe (25) qui peut passer devant la chambre de compression et qui coopère avec une contre-arête de coupe (42), qui délimite la chambre de compression ou est adjacente à la chambre de compression, de telle manière que des parties de liaison disposées dans la chambre de compression sont détachées des conducteurs quand le dispositif de couteau est activé,
**caractérisé en ce**
**qu'**un moteur d'entraînement du dispositif d'entraînement est disposé dans un espace d'installation (44) disposé au-dessous de la sonotrode dans la direction de l'axe Z, le moteur d'entraînement étant relié avec un porte-couteau (26) par l'intermédiaire d'un mécanisme de déviation (31) afin que le couteau puisse effectuer un mouvement de coupe, le porte-couteau étant déplaçable dans la direction de l'axe Z.

2. Dispositif selon la revendication 1,
**caractérisé en ce que**
le porte-couteau (26) est muni d'un dispositif de guidage (27) destiné à guider le porte-couteau en translation dans la direction de l'axe Z, le dispositif de guidage étant disposé dans un plan d'installation (46) formé dans un contour extérieur (45) du dispositif ou adjacent au contour extérieur.

3. Dispositif selon la revendication 2,
**caractérisé en ce que**
le dispositif de guidage (27) est réalisé comme un insert de guidage inséré dans un évidement (39) d'un boîtier du dispositif.

4. Dispositif selon la revendication 2 ou 3,
**caractérisé en ce que**
le mécanisme de déviation (31) est réalisé comme un mécanisme de moyen de traction.

5. Dispositif selon la revendication 4,
**caractérisé en ce que**
le mécanisme de déviation (31) a une corde de moyen de traction dont l'extrémité entraînée (34) est reliée avec une tige de piston (35) d'un vérin de puissance (32) et dont l'extrémité de sortie (38) est reliée avec le porte-couteau (26), le corde de moyen de traction étant déviée par l'intermédiaire d'une roue de déviation de telle manière que l'extrémité entraînée s'étend dans la direction de la tige de piston du vérin de puissance et l'extrémité de sortie s'étend dans la direction de l'axe Z.

6. Dispositif selon la revendication 5,
**caractérisé en ce que**
le vérin de puissance (32) se composé de manière modulaire de plusieurs éléments de vérin de puissance (41) disposés en série dans la direction de la tige de piston (35).

7. Dispositif selon la revendication 5 ou 6,
**caractérisé en ce que**
la corde de moyen de traction est réalisée comme une chaîne (33) qui est déviée par l'intermédiaire d'une roue dentée (36) afin de former le mécanisme de déviation (31).

8. Dispositif selon l'une quelconque des revendications 5 ou 7,
**caractérisé en ce**
**qu'**un dispositif de ressort (43) qui cause un mouvement de rappel du porte-couteau (26) est prévu afin d'effectuer un mouvement de rappel du couteau (24) après le mouvement de coupe.

9. Dispositif selon la revendication 8,
**caractérisé en ce que**
le dispositif de ressort (43) est disposé entre le porte-couteau (26) et le dispositif de guidage (27) du porte-couteau.

10. Dispositif selon l'une quelconque des revendications précédentes,
**caractérisé par**
des capteurs (47) disposés à des extrémités du mouvement de coupe effectué par le couteau (24).

11. Dispositif selon la revendication 10,
**caractérisé en ce que**
les capteurs (47) sont connectés à un dispositif d'enregistrement pour l'enregistrement de signaux de sortie des capteurs.
